# EUROPÄISCHE PATENTANMELDUNG

(11) **EP 2 765 387 A2**
(43) Veröffentlichungstag der Anmeldung: **13.08.2014**
(21) Anmeldenummer: 14154600.2
(22) Anmeldetag: 11.02.2014
(51) Int. Cl.: G01C 9/14, H01H 35/02

(54) **Kontaktpendelvorrichtung für Baumaschinen**

(30) Priorität: 12.02.2013 CH 4352013
(71) Anmelder: Geoplan Swiss AG, 8832 Wollerau (CH)
(72) Erfinder: Reichmuth, Roger, 8735 St. Gallenkappel (CH); Müller, Remo, 8864 Reichenburg (CH)
(74) Vertreter: Liebetanz, Michael

(57) **Zusammenfassung**

Die vorliegende Erfindung betrifft eine Kontaktpendeleinheit (10) für ein Kraftfahrzeug, insbesondere eine Baumaschine, umfassend ein Pendelgehäuse (12) mit einer Pendelkammer (14), ein in der Pendelkammer (14) untergebrachtes Kontaktpendel (16), eine Kontaktsensoreinheit (20) mit einer in der Pendelkammer (14) um das Kontaktpendel (16) pendelgehäusefest angeordnete Kontaktfläche (22) zur Kontaktaufnahme mit dem Kontaktpendel (16). Das Kontaktpendel (16) ist im Pendelgehäuse (12) an einer Anlenkung (18) angelenkt, derart, dass es bei neigungsfreier Raumlage des Pendelgehäuses (12) in Lotposition kontaktfrei zur Kontaktfläche (22) in der Pendelkammer (14) hängt und bei jeweils vorbestimmt geneigter Raumlage des Pendelgehäuses (12) in mindestens zwei quer zueinander stehende Richtungen zum Kontakt mit der Kontaktfläche (22) in eine Kontaktposition pendelbar gelagert ist. Die Pendelkammer (14) ist zumindest teilweise, vorzugsweise im Wesentlichen vollständig mit einer Dämpfungsflüssigkeit gefüllt. Zudem betrifft die Erfindung eine Vorrichtung aus zwei solchen Kontaktpendeleinheiten (10, 10'), welche um 180° verdreht zueinander angeordnet sind.

## Beschreibung

### TECHNISCHES GEBIET

Die vorliegende Erfindung betrifft eine Kontaktpendeleinheit für Baumaschinen nach dem Oberbegriff des Anspruchs 1 sowie eine Kontaktpendelvorrichtung mit einer Anordnung von zwei Kontaktpendeleinheiten nach dem Oberbegriff des Anspruchs 13.

### STAND DER TECHNIK

Aus dem Stand der Technik sind Kontaktpendel zur Messung einer relativen Stellung eines Körpers bezüglich der Lotrichtung, d.h. der Wirkungsrichtung der Schwerkraft, bekannt.

Die DE 2 458 928 C2 betrifft eine Vorrichtung zur Messung eines Winkels zwischen einer Schwerkraftrichtung und einer Achse eines Körpers mit Hohlraum. Es wird gelehrt, dass ein einzelnes permanentmagnetisches Pendel im Hohlraum des Körper aufgehängt ist, welches in elektromagnetischer Wechselwirkung mit einer Anordnung von elektromagnetischen Aufnehmerspulen steht, welche unter Wirkeinfluss des Magneten im Hohlraum platziert sind, womit eine besonders temperaturunempfindliche Vorrichtung bereitgestellt ist.

Die EP 1 292 492 B1 lehrt eine automatische Warnvorrichtung zur Warnung vor einer kritischen Schiffsneigung, wobei ein Kontaktpendel auf einem elektrischen Potential gehalten wird und ein das Kontaktpendel umgebendes Kontaktelement auf einem anderen elektrischen Potential gehalten wird, wobei ein Kontakt zu einem messbaren Spannung und einer entsprechenden Detektion einer vorbestimmten Neigung führt.

Diese Pendel sind zur Ausmessung von Bohrlöchern oder für sanfte Schiffneigungen bei Wellengang gedacht.

### DARSTELLUNG DER ERFINDUNG

Es ist eine Aufgabe der vorliegenden Erfindung, eine verbesserte Kontaktpendeleinheit, insbesondere für einen Neigungsmesser anzugeben, welche robust und schlagfest und damit zum Einsatz auf groben Baumaschinen geeignet ist.

Diese und weitere Aufgaben werden durch eine Kontaktpendeleinheit für ein Kraftfahrzeug, insbesondere eine Baumaschine bzw. ein Kraftfahrzeug mit Bauwerkzeugaufsatz, umfassend ein Pendelgehäuse mit einer Pendelkammer, ein in der Pendelkammer untergebrachtes Kontaktpendel, eine Kontaktsensoreinheit mit einer in der Pendelkammer um das Kontaktpendel pendelgehäusefest angeordnete Kontaktfläche zur Kontaktaufnahme mit dem Kontaktpendel, wobei das Kontaktpendel im Pendelgehäuse derart an einer Anlenkung angelenkt ist, dass es bei neigungsfreier Raumlage des Pendelgehäuses in Lotposition kontaktfrei zur Kontaktfläche in der Pendelkammer hängt und bei jeweils vorbestimmt geneigter Raumlage des Pendelgehäuses in mindestens zwei quer zueinander stehende Richtungen zum Kontakt mit der Kontaktfläche in eine Kontaktposition pendelbar gelagert ist, dadurch gelöst, dass die Pendelkammer zumindest teilweise, vorzugsweise im Wesentlichen vollständig mit einer Dämpfungsflüssigkeit gefüllt ist.

Bevorzugt ist ein Kontaktpendel, welches ein Hohlkörper mit einem inwendingen Hohlraum ist. Ein Hohlkörper als Pendelkörper ist vorteilhaft, da so Gewicht eingespart werden kann. Ein solcher Hohlkörper kann bspw. ein Hohlzylinder oder Rohr mit rundem oder viereckigem Querschnitt sein.

Besonders bevorzugt ist, wenn die Dämpfungsflüssigkeit teilweise in den Hohlraum des Kontaktpendels dringt und wenn die Flüssigkeit, welche ausserhalb des Hohlraums und im Pendelgehäuse ist, und jene im Hohlraum in Fluidkommunikation stehen. Flüssigkeit kann also in den Hohlraum fliessen und zurück in die Pendelkammer. Es ist also eine entsprechende Strömungsbildung, je nach Pendelbewegung möglich. So wird die Wirkung der Dämpfungsflüssigkeit auf den Pendelkörper erhöht. Zur genannten Fluidkommunikation weist der Hohlkörper vorzugsweise einen oder mehrere Durchbrüche von der Pendelkammer in den Hohlraum auf. Diese Durchbrüche können endseitig bezüglich einer Längserstreckung des Hohlkörpers und/oder lateral in einer Seitenwand des Hohlkörpers vorgesehen sein.

Die Dämpfungsflüssigkeit ist vorzugsweise ein Flüssigkeit, welche in einem Temperaturbereich von Minus 30 Grad Celsius bis 70 Grad Celsius eine Viskosität von 0.1 bis 1000 mPa s (Millipascalsekunden), besonders bevorzugt von 0.4 bis 100 mPa s, insbesondere von 0.8 bis 5 mPa s. Besonders bevorzugt wird als Dämpfungsflüssigkeit ein Gemisch aus Wasser und einem Frostschutzmittel, bspw. Glycerin, Ethanol und/oder weitere Glykole, verwendet, wie es in herkömmlichen Kühlsystemen bzw. Scheibenwischanlagen von Kraftfahrzeugen Verwendung findet. Die Dämpfungsflüssigkeit kann kohäsiv oder adhäsiv sein.

Vorteilhafterweise sind Kontaktpendelflächen des Kontaktpendels, welche zum Kontakt mit der Kontaktfläche bestimmt sind bzw. an welchen das Kontaktpendel anschlägt, derart ausgebildet, dass die Kontaktpendelflächen in punktfärmigen, linienförmigen oder flächigen Kontakt mit der Kontaktfläche treten. Ein flächiger Kontakt verkleinert den Kontaktwiderstand für den elektrischen Kontaktstrom. Ein punkt- oder linienförmiger Kontakt erhöht die Präzision des Anschlages.

In einer Weiterbildung besteht das Kontaktpendel aus einem starren Körper, welcher vorzugsweise einstückig und vorzugsweise aus einem Leichtmetall wie etwa Aluminium ausgebildet ist. Alternativerweise kann ein anderes vorzugsweise leichtes und elektrisch leitendes Material verwendet werden. Auch eine Materialkombination aus einem vorzugsweise leichten Träger und einer auf dem Träger aufgebrachten Leitschicht ist denkbar.

Der starre Körper ist vorzugsweise im Wesentlichen zylinderförmig und freihängend in der Pendelkammer angelenkt und pendelt, je nach Raumlage relativ zum Pendelgehäuse in der Pendelkammer. Der Hohlraum ist vorzugsweise über eine endseitige am freien Ende des Kontaktpendels angeordnete Öffnung mit der Dämpfungsflüssigkeit in Fluidkommunikation.

Vorzugsweise weist das Kontaktpendel eine runde, vorzugsweise kreisrunde Querschnittsgestalt auf. Besonders bevorzugt ist eine Querschnittsgestalt das Kontaktpendel, derart, dass je nach Raumlage, auch an mehreren Kontaktflächen anschlagen kann.

Besonders bevorzugt ist eine Anlenkung, kreuz- oder kardangelenkartig ausgebildet ist, wobei das Kontaktpendel derart über diese Anlenkung in die Pendelkammer ragend im Pendelgehäuse angelenkt ist, dass das Kontaktpendel in zwei senkrecht aufeinander stehenden Pendelebenen in die jeweilige Kontaktposition pendelbar gelagert ist. In jeder Kontaktposition steht das Pendel mit der Kontaktfläche in elektrischem Kontakt. Alternativerweise kann auch ein Kugelgelenkt oder eine scharnierartige Aufhängung oder Dergleichen verwendet sein.

In einer vorteilhaften Ausgestaltung der Kontaktpendeleinheit sind das Kontaktpendel und die Kontaktfläche derart im Pendelgehäuse angeordnet, dass ein Schaltabstand, welchen das Kontaktpendel zwischen der Lotposition und der Kontaktposition zurücklegt, 0.2 Millimeter bis 10 Millimeter, vorzugsweise 0.5 bis 2 Millimeter und insbesondere im Wesentlichen 0.8 Millimeter beträgt. Dieser Schaltabstand kann jedoch auch grösser sein, bspw. 2 Millimeter bis 30 Millimeter oder mehr betragen. Ein kurzer Schaltabstand ist vorteilhaft, da ein er ein präzises Schalten erlaubt und die Kontaktpendeleinheit so eine hohe Sensitivität aufweist. Ein derart kurzer Schaltabstand begrenzt einen maximalen Ausschlagwinkel des Kontaktpendels vorzugsweise auf unter 10°, vorzugsweise auf unter 5°, insbesondere auf 1 bis 5°.

Bevorzugt wird, dass die genannte Kontaktfläche der Kontaktsensoreinheit Kontaktflächenabschnitte aufweist, wobei die Kontaktflächenabschnitte vorzugsweise derart angeordnet sind, dass jede Pendelebene in einer Kontaktposition von einem Kontaktflächenabschnitt quer durchstossen wird. Vorteilhafterweise stehen sich also jeweils zwei die gleiche Pendelebene schneidende Kontaktflächenabschnitte parallel gegenüber. Es wird somit eine Kontaktfläche bevorzugt, welche sich aus vier Kontaktflächenabschnitten zusammensetzt.

Weiter ist es vorteilhaft, wenn das Kontaktpendel derart im Pendelgehäuse angelenkt ist, dass es in jeder Raumlage des Pendelgehäuses zwischen den Kontaktflächenabschnitten verbleibt.

Vorzugsweise füllt das Kontaktpendel die Pendelkammer derart aus, dass es zu allen Seitenwänden des Pendelgehäuses etwa 1 bis 10 Millimeter beabstandet ist. Eine Länge des Kontaktpendel ist vorzugsweise so gewählt, dass ein Abstand des freien Endes zum nächstliegenden Deckelelement, d.h. zum Pendelkammerboden, etwa 5 bis 10 Millimeter beträgt.

Das Kontaktpendel und die Kontaktfläche sind vorzugsweise auf unterschiedlichen elektrischen Potentialen gehalten, wobei eine elektrische Spannung zwischen dem ersten und dem zweiten elektrischen Potential vorzugsweise im Bereich von 1.5 Volt bis 30 Volt, besonders bevorzugt im Bereich von 6 Volt bis 24 Volt liegt und insbesondere im Wesentlichen 12 Volt beträgt.

Alternativerweise kann die Kontaktsensoreinheit einen Kontaktpendelanschlag an einer Kontaktfläche auch über Influenzladung oder optisch oder mittels einer anderen geeigneten Methode detektieren.

Es ist eine weitere Aufgabe der vorliegenden Erfindung, eine Kontaktpendelvorrichtung, insbesondere für einen Neigungsmesser, anzugeben, welche um 180° verdreht einsetzbar ist und gleichzeitig robust und schlagfest ist.

Diese und weitere Aufgaben werden durch eine Kontaktpendelvorrichtung mit mindestens zwei Kontaktpendeleinheiten, insbesondere wie oben beschrieben, dadurch gelöst, dass die Kontaktpendeleinheiten jeweils ein Pendelgehäuse mit einer Pendelkammer und einem darin an einer Anlenkung angelenkten Kontaktpendel aufweisen, wobei die Kontaktpendeleinheiten derart zueinander angeordnet sind, dass die Kontaktpendel sich in entgegengesetzte Richtungen in den jeweiligen Pendelgehäusen erstrecken, wobei je nach Raumlage der Kontaktpendelvorrichtung mindestens die Kontaktpendeleinheiten mit dem freihängenden Kontaktpendel in Betriebsbereitschaft steht.

Bevorzugt weist die Kontaktpendelvorrichtung eine Aktivierungseinheit zur raumlageabhängigen Aktivierung einer Kontaktpendeleinheit auf. Die Aktivierungseinheit ist vorzugsweise in einem Gehäuse auf dem Pendelgehäuse oder fest zum Pendelgehäuse angebracht. Diese Aktivierungseinheit weist ein unter Gravitationseinwirkung bewegliches Aktivierungselement in einer Kontaktkammer des besagten Gehäuses auf. Je nach Raumlage der Kontaktpendelvorrichtung bzw. der Kontaktpendeleinheit liegt das Aktivierungselement derart in der Kontaktkammer, dass die Kontaktpendeleinheit dann aktiviert ist, wenn deren Kontaktpendel hängt, während gleichzeitig die andere Kontaktpendeleinheit, deren Kontaktpendel in der Anlenkung, bspw. dem Kreuzgelenk steht, deaktiviert ist. Ist die Kontaktpendeleinheit aktiviert, so steht deren Kontaktsensoreinheit in Bereitschaft, d.h. die Kontaktflächen werden vorzugsweise auf ein vorbestimmtes Potential im Vergleich zum Kontaktpendel gebracht. Ist die Kontaktpendeleinheit deaktiviert, so wird keine Spannung an die Kontaktsensoreinheit bzw. deren Kontaktflächen angelegt. Die Aktivierungseinheit kann also auch als Richtungssensor verstanden werden. Eine solche Aktivierungseinheit ist vorteilhaft, da sie eine gegenseitige Störung zwischen den Kontaktpendeleinheiten verhindert.

Die Aktivierungseinheit kann in der Kontaktkammer ein Aktivierungskontaktpaar für jede Kontaktpendeleinheit umfasst, wobei sich die Aktivierungskontaktpaare diametral in der Kontaktkammer gegenüberliegen. Das Kontaktelement ist hierbei derart beweglich in der Kontaktkammer angeordnet, dass eine Kontaktpendeleinheit über eine die zugeordneten Aktivierungskontaktpaar kontaktierende Lage des Aktivierungselements mittels des Kontaktelements aktiviert ist, wenn deren Kontaktpendel frei in der Anlenkung hängt, während die zweite Kontaktpendeleinheit, deren Pendel in der Anlenkung steht, deaktiviert ist. Es ist alternativ auch denkbar, dass anstelle der Aktivierungskontakte Näherungsschalter in gleicher Anordnung in der Kontaktkammer angeordnet sind, wobei ein Näherungsschalter eine ihm zugeordnete Kontaktpendeleinheit aktiviert, wenn der Schalter aufgrund der Nähe des Aktivierungselements betätigt ist.

Die vorgenannte Kontaktpendeleinheit oder die oben beschriebenen Kontaktpendelvorrichtung wird vorzugsweise zur Nivellierung von Werkzeugaufsätzen auf Baumaschinen eingesetzt, insbesondere für Ramm- und Bohrwerkzeuge oder kombinierte Ramm- und Bohrwerkzeuge oder Verdrängungswerkzeuge für Bagger oder Traktoren.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen Längsschnitt durch eine erfindungsgemässe Kontaktpendelvorrichtung;
- Fig. 2: eine Draufsicht auf eine offene Aktivierungseinheit für eine Kontaktpendelvorrichtung gemäss Fig. 1;
- Fig. 3: eine perspektivische Ansicht der Aktivierungseinheit nach Fig. 2; und
- Fig. 4: eine weitere perspektivische Ansicht der Aktivierungseinheit nach Fig. 2.

### BESCHREIBUNG BEVORZUGTER AUSFÜHRUNGSFORMEN

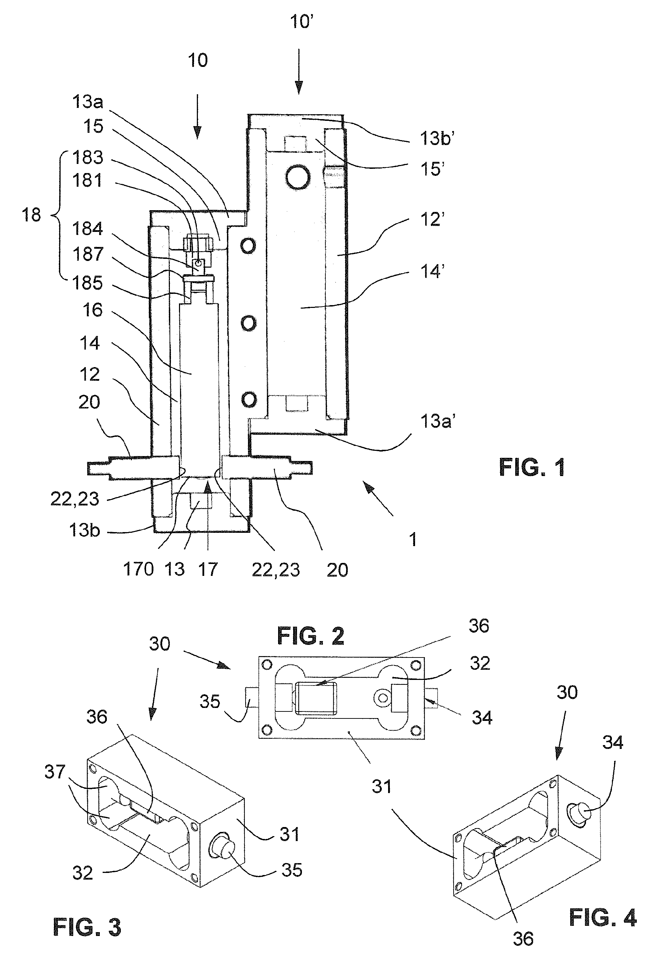

**Figur 1** zeigt einen Längsschnitt durch eine bevorzugte Ausführungsform der vorliegenden Erfindung. Es ist ein Neigungsmesser bzw. eine Kontaktpendelvorrichtung 1 mit zwei um 180° verdreht angeordneten Kontaktpendeleinheiten 10, 10' dargestellt. Es wird nun zuerst die erste Kontaktpendeleinheit 10 (links in Fig. 1) beschrieben, nachfolgend die Kontaktpendelvorrichtung 1 mit der ersten und einer zweiten Kontaktpendeleinheit 10, 10'.

Die erste Kontaktpendeleinheit 10 weist ein Pendelgehäuse 12 auf, welches sich entlang einer Längsachse erstreckt und einen quadratischen Querschnitt hat. Eine Länge der Quadratseiten der Querschnittsform beträgt etwa ein Viertel der Längserstreckung des Pendelgehäuses 12. Die Längserstreckung beträgt etwa 15 Zentimeter. Eine Wandstärke des Pendelgehäuses 12 beträgt etwa 1 Zentimeter. Das Pendelgehäuse 12 ist aus Aluminium gefertigt. An Stirnseiten des Gehäuses 12 sind ein erstes Deckelelement 13a und ein zweites Deckelelement 13b eingepasst, welche stirnseitig auf den Pendelgehäusewänden flanschartig aufliegen und mit einem Vorsprung 15 in eine Pendelkammer 14 einragen. Der Vorsprung 15 füllt einen quaderförmigen Einragungsbereich der Pendelkammer 14 vollständig aus, womit die Pendelkammer 14 lateral durch die Pendelgehäusewände und in Längsrichtung durch distale Endflächen der Vorsprünge 15 der Deckenelemente 13a und 13b begrenzt ist.

Die Deckelelemente 13a, 13b sind mit dem Gehäuse 12 stirnseitig verschraubt und dichten die Pendelkammer 14 derart dicht gegen aussen ab, dass eine Dämpfungsflüssigkeit nicht nach aussen dringen kann. In die distale Endfläche des Deckelelements 13a, 13b ist eine Ausnehmung 13 eingelassen, in welcher eine kardanartige Aufhängung 18 verankerbar ist.

Die Aufhängung 18 ist durch ein erstes Anlenkglied 181 und ein zweites Anlenkglied 185 gebildet. Das erste Anlenkglied 181 ist in der Ausnehmung 13 des in Fig. 1 oben gezeichneten ersten Deckelements 13a festgestellt und ragt 5 bis 10 Millimeter in Längsrichtung in die Pendelkammer 14 ein. An einem freien Ende des ersten Anlenkglieds 181 ist eine erste Anlenkachse 183 gelagert. An dieser ersten Anlenkachse 183 ist ein Zwischenstück 184 einseitig und rotierbar angelenkt. Am gegenüberliegenden Endbereich des Zwischenstücks 184 ist ein zweites Anlenkglied 185 über eine zweite Anlenkachse 187 angelenkt. Die erste Achse 183 verläuft in ihrer Längsersterstreckung lateral (senkrecht zur Zeichenebene von Fig. 1) und parallel zwischen zwei gegenüberliegenden Pendelgehäusewänden. Die zweite Achse 187 ist gekreuzt zur ersten Achse 183 angeordnet und verläuft ebenfalls lateral. Das erste und zweite Anlenkglied 181, 185 bilden mit dem Zwischenstück 184 eine Kreuzgelenk, derart, dass das zweite Anlenkglied 185 auf jede der vier Pendelgehäusewände schwenkbar bzw. pendelbar gelagert ist.

Am zweiten Anlenkglied 185 schliesst distal (in Fig. 1 nach unten) ein Kontaktpendel 16 an. Das Kontaktpendel 16 ist fest mit dem zweiten Anlenkglied 185 verbunden und erstreckt sich längs der Pendelkammer 14 gegen das zweite Deckelelement 13b, derart, dass das Kontaktpendel 16 etwa 1 Zentimeter zum Vorsprung 15 des Deckelelements 13b beabstandet in der Anlenkung 18 gelagert ist.

Das Kontaktpendel 16 ist ein starrer Körper in der Form eines Hohlzylinders aus Aluminium mit einem Aussendurchmesser von etwa 2 Zentimeter und einer Wandstärke von etwa 1 bis 1.5 Millimeter, vorzugsweise 1.2 Millimeter. Das Kontaktpendel 16 ist von kreisrunder Querschnittsgestalt und einstückig geformt. Ein Hohlraum 17 ist über eine untere Öffnung 170 direkt mit der Pendelkammer 14 verbunden. Das Kontaktpendel 16 kann auch oben, im Bereich des zweiten Anlenkglieds 185 offen sein. Zusätzlich können Durchbrechungen (nicht dargestellt) in der Wand der Hohlzylinders 16 vorgesehen sein, welche den Hohlraum 17 mit der Pendelkammer 14 verbinden. Durch diese Bauweise hat das Kontaktpendel 16 geringes Gewicht und eine minimale Eigenschwingung, was die Präzision der Einheit 10 erhöht.

In einem Pendelendbereich um das freies Ende des angelenkten Kontaktpendels 16 ist eine Kontaktsensoreinheit 20 mit mehreren Elektroden angeordnet. Je eine Elektrode durchbricht eine Pendelgehäusewand des Pendelgehäuse 12 lateral von aussen und ragt senkrecht im Pendelendbereich in die Pendelkammer 14 ein. Es sind also vier Elektroden vorgesehen. Die freien Enden der einragenden Elektrodenabschnitte weisen Endflächen auf, welche als Kontaktflächenabschnitte 22 ausgebildet und gegen das Pendel 16 gerichtet sind. Jede Elektrode durchbricht hierbei eine unterschiedliche Wand des Pendelgehäuses 14, wobei die Elektroden auf gleicher Höhe bezüglich der Längserstreckung des Kontaktpendels 16 angeordnet sind.

Wird die Kontaktpendelvorrichtung 1 gemäss Fig. 1 im Uhrzeigersinn in der Zeichenebene von Fig. 1 verschwenkt, wobei die Schwerkraft nach unten in der Zeichenebene wirkt, so wird das Pendel 16 für den Betrachter in der Kammer im Gegenuhrzeigersinn gegen den rechten Kontaktflächenabschnitt 23 in Fig. 1 verschwenkt und kommt dort zum Anschlag, wobei ein elektrischer Kontakt zwischen Pendel 16 und Elektrode geschlossen wird. Wird das Gehäuse 12 im Gegenuhrzeigersinn in der Zeichenebene verkippt, so kommt das Pendel 16 auf der linken Elektrode zum Anschlag. Wird der obere Teil der Vorrichtung nach Fig. 1 aus der Zeichenebene von Fig. 1 und der untere Teil in diese Zeichenebene verkippt, so kommt das Pendel 16 auf der vorderen Elektrode zum Anschlag. Wird das Pendelgehäuse 12 schräg verkippt, so kann das Pendel 16 zwei entlang der Pendelkammerwand direkt benachbarte Elektroden elektrisch kontaktieren.

Ein Schaltabstand zwischen einem solchen Kontaktflächenabschnitt 23 und dem Pendel 16 bei lotgerecht ausgerichteten Pendelgehäuse 12 mit dem Kontaktpendel 16 in Lotposition (Darstellung gemäss Fig. 1, wobei da die Schwerkraft nach unten wirkt) beträgt etwa 0.8 Millimeter. Durch diesen kurzen Schaltabstand wird eine hohe Genauigkeit der Kontaktpendeleinheit 10 in der Funktion als Neigungsmesser erreicht.

Die vorgenannten Elektroden stellen gemeinsam eine Kontaktfläche 22 bereit, wobei jede einzelne Elektrode einen Kontaktflächenabschnitt 23 zum Kontakt mit dem Pendel 16 aufweist. Diese aus den Kontaktflächenabschnitten 23 gebildete Kontaktfläche 22 ist elektrisch vom Pendel 16 isoliert. Die Kontaktfläche 22 und das Pendel 16 sind hierbei mittels jeweils einer entsprechenden elektrischen Zuleitung (nicht in den Figuren dargestellt) auf verschiedenen elektrischen Potentialen gehalten, derart, dass eine Spannung von 12 oder 24 Volt zwischen Kontaktfläche 22 und Pendel 16 herrscht.

Über eine in den Zeichnungen nicht dargestellte Elektronik ist der elektrische Kontakt zwischen dem elektrisch leitenden Kontaktpendel 16 und dem Kontaktflächenabschnitt 23 detektierbar. Je nach Raumlage des Pendelgehäuses bezüglich der Schwerkraftwirkung werden unterschiedliche Kontaktflächenabschnitte 23 elektrisch durch das Pendel 16 kontaktiert. Die genannte Elektronik registriert einen solchen elektrischen Kontaktschluss und kann somit Information über die Raumlage des Gehäuses und von starr damit verbundenen Objekten bereitstellen.

Die Pendelkammer 14 ist mit einer elektrisch nicht leitenden Dämpfungsflüssigkeit gefüllt, um die Störwirkung von allfälligen Schwingungen, bspw. eines arbeitenden Motors, zu unterdrücken. Als Dämpfungsflüssigkeit wird Wasser mit einem Zusatz von Frostschutzmittel verwendet, was neben einer geeigneten Viskosität den zusätzlichen Vorteil der Funktionsfähigkeit bei Temperaturen unter dem Gefrierpunkt bietet. Diese Dämpfungsflüssigkeit füllt somit die Pendelkammer 14 und den Hohlraum 17 des Kontaktpendels 16 im Wesentlichen vollständig, wobei die Flüssigkeit im Hohlraum 17 mit der Flüssigkeit in der Kammer 14 ausserhalb des Pendels 16 in Fluidkommunikation steht, was Schwingungen grösser als 10 Hz zusätzlich abdämpft.

Eine solche Kontaktpendeleinheit 1 kann als eigenständige Vorrichtung auf einem Werkzeug, bspw. einem Ramm-, Bohr- oder Verdrängerwerkzeug zur Bereitstellung von Erdlöchern, montiert werden. Eine das Werkzeug führende Baumaschine kann sodann mit der entsprechenden Elektronik diese fest am Werkzeug angebrachte Kontaktpendeleinheit 10 als Neigungsmesser verwenden. Es ist denkbar, dass eine Rückmeldung des Neigungssensors 10 direkt auf die Elektronik der Bauchmaschine wirkt und so eine automatische Einstellung bzw. Überwachung der Raumlage des Werkzeugs, insbesondere bezüglich dessen Lotrichtung, vornimmt und/oder einem Baumaschinenführer entsprechende Rückmeldung bereitstellt.

In Fig. 1 ist auf der rechten Seite eine zweite Kontaktpendeleinheit 10' dargestellt. Diese zweite Kontaktpendeleinheit 10' ist identisch in Aufbau und Funktion wie die Kontaktpendeleinheit 10. Der Übersichtlichkeit halber sind nicht alle Komponenten dargestellt, lediglich das Gehäuse 12' mit den Deckelelementen 13a', 13b'.

Wie aus Figur 1 erkennbar ist, ist das Pendelgehäuse 12' der zweiten Kontaktpendeleinheit 10' um 180° um eine Achse senkrecht zur Längserstreckung der Kontaktpendeleinheit 10 verdreht neben dem Pendelgehäuse 12 der ersten Kontaktpendeleinheit 10 angeordnet. Zudem ist die verdreht angeordnete zweite Kontaktpendeleinheit 10' um etwa 3 bis 5 Zentimeter entlang der Längsrichtung versetzt angeordnet (in Fig. 1 nach oben verschoben). Diese versetzte Anordnung stellt jeweils den Bereich des Pendelgehäuses 12, 12', in welchem die Elektroden die Gehäusewand durchbrechen, frei. Diese Anordnung ermöglicht also eine einfache Integration der Kontaktsensoreinheit 20 mit den Elektroden in das jeweilige Pendelgehäuse 12, 12'.

Das erste Deckelelement 13a' ist nun unten in der Darstellung des Pendelgehäuses 12' in Fig. 1. In das erste Deckelelement 13a' wird dann ebenfalls eine Anlenkung 18, ein Pendel 16 mit eine Kontaktsensoreinheit 20 eingepasst, was in Fig. 1 der Übersicht halber jedoch nicht dargestellt ist. Wirkt die Schwerkraft in Fig. 1 nun nach unten, so hängt das Kontaktpendel 16 der ersten Kontaktpendeleinheit 10 in Lotposition nach unten, während das Kontaktpendel der zweiten Kontaktpendeleinheit 10' zwischen den Kontaktflächenabschnitten verbleibend in der Anlenkung steht und je nach Raumlage gegen mindestens einen Kontaktflächenabschnitt der Kontaktsensoreinheit der zweiten Kontaktpendeleinheit lehnt. Bei einer solchen Kontaktpendelvorrichtung 1 mit zwei verdreht angeordneten Kontaktpendeleinheiten 10, 10' ist es daher vorteilhaft, wenn das Pendel 16 als ein starrer Körper geformt ist. Zudem ist die Anlenkung 18 derart stabil ausgebildet, dass sie das je nach Raumlage in der Anlenkung 18 stehende Pendel 16 bei umgekehrter Schwerkraftwirkung auffängt.

Die beiden Kontaktpendeleinheiten 10, 10' der Vorrichtung 1 weisen jeweils separate und fluiddichte Pendelkammern 14, 14' auf.

Vorzugsweise ist das Pendelgehäuse 12, 12' aus Aluminium gefertigt, während das Kreuzgelenkt 18 aus Stahl geformt ist.

Die Kontaktpendelvorrichtung 1 mit den verdreht angeordneten Kontaktpendeleinheiten 10, 10' wird vorteilhaft zur Nutzung eines Werkzeugs, das in Lotrichtung ausgerichtet sein soll und eine Wechseloption aufweist, verwendet. Eine mögliche Wechseloption wäre bspw., wenn ein sich entlang einer Längsachse erstreckendes Werkzeug zur einen Seite der Achse hin ein Bohrgerät und zur anderen Seite der Achse ein Rammgerät aufweist. Je nach Stellung kann eines der beiden Geräte genutzt werden, wobei durch eine 180°- Verschwenkung senkrecht zur Längsachse das andere Gerät einsetzbar gemacht werden kann. Sowohl das Bohr- als auch das Rammgerät sollten lotgerecht bedient werden, womit die vorliegenden Kontaktpendelvorrichtung 1 ideal eingesetzt werden kann, wobei je eine der Kontaktpendeleinheiten 10, 10' einem Gerät zugewiesen ist.

Beide Kontaktpendeleinheiten 10, 10' funktionieren auf dem oben beschriebenen elektrischen Kontaktprinzip. Damit nun ein in der Anlenkung 18 stehender Kontaktpendel 16 nicht einen Dauerkontakt schliesst, unnötig Energie verschleisst, Material beansprucht und die Messung der anderen Einheit stört ist ein Richtungssensor bzw. eine Aktivierungseinheit 30 vorgesehen, welche eine Kontaktpendeleinheit 10, 10' mit in der Anlenkung 18 stehendem Kontaktpendel 16 ausschaltet, d.h. die Spannung über Pendel 16 und Kontaktfläche 22 aufhebt.

Diese Aktivierungseinheit 30 ist in Figuren 2 bis 4 dargestellt. Figur 2 zeigt eine Draufsicht, während Figuren 3 und 4 jeweils eine perspektivische Ansicht der Einheit 30 zeigen. Die Aktivierungseinheit 30 ist offen dargestellt, wobei in den Ecken Löcher für Schraubverbindung mit einem Deckel aus Aluminium vorgesehen sind. Die Aktivierungseinheit 30 weist ein Gehäuse 31 aus Aluminium auf, in welchem eine Kontaktkammer 32 liegt. In dieser sich in Montageposition längs der Längsrichtung der Pendelkammer 14 erstreckenden Kontaktkammer 32 sind gehäusewandseitig, parallel zu den Deckelelementen 13a, 13b, liegende Näherungsschalter 34, 35 untergebracht. Ein Aktivierungselement 36 ist unter der Einwirkung der Schwerkraft beweglich in der Kammer 32 gelagert. Das Aktivierungselement 36 kann frei unter Gravitationswirkung in der Kammer fallen, wobei es hierbei vorzugsweise durch die Gehäusewände zum hin- und herfallen zwischen entsprechenden Nahbereichen zu den beiden Näherungssensoren 34, 35 geführt ist. Das Aktivierungselement 36 ist als Aluminiumklotz ausgeformt.

Je nach Raumlage liegt das Aktivierungselement 36 nahe dem ersten Näherungssensor 34 oder nahe dem zweiten Näherungssensor 35, d.h. in dessen Nahbereich, und betätigt somit den entsprechenden Schalter 34 oder 35, womit dann die Kontaktpendeleinheit 10 oder 10' mit dem in der entsprechenden Anlenkung 18 hängenden Pendel 16 aktiviert ist, während die andere Kontaktpendeleinheit 10' oder 10 deaktiviert ist.

Seitlich um die Kontaktschalter 34 und 35 sind Ausfräsungen 37 angebracht (s. Figs. 2 bis 4). Diese Ausfräsungen 37 stellen sicher, dass der entsprechende Näherungssensor 34, 35 nicht durch die unmittelbare Gehäusewandnähe betätigt und damit daueraktiviert ist.

Die Kontaktkammer 32 ist vorzugsweise luftgefüllt und weist vorzugsweise Abmessungen von etwa 100 auf 50 auf 50 Millimeter auf. Die Näherungssensoren 34, 35 sowie die Kontaktsensoreinheit 20 können mit einer herkömmlichen elektronischen Schaltung verschaltet und betätigbar sein.

**BEZUGSZEICHENLISTE**

| | | | |
|---|---|---|---|
| 1 | Kontaktpendelvorrichtung | 184 | Zwischenstück |
| | | 185 | zweites Anlenkglied |
| 10 | Kontaktpendeleinheit | 187 | zweite Achse |
| 12 | Pendelgehäuse | | |
| 13 | Ausnehmung | 20 | Kontaktsensoreinheit |
| 13a | erstes Deckelelement | 22 | Kontaktfläche |
| 13b | zweites Deckelelement | 23 | Kontaktflächenabschnitt |
| 14 | Pendelkammer | | |
| 15 | Vorsprung | 30 | Aktivierungseinheit |
| 16 | Kontaktpendel | 31 | Gehäuse |
| 17 | Hohlkammer | 32 | Kontaktkammer |
| 170 | Öffnung zu 17 | 34, 35 | Näherungsschalter |
| | | 36 | Aktivierungselement |
| 18 | Anlenkung | 37 | Ausfräsung |
| 181 | erstes Anlenkglied | | |
| 183 | erste Achse | | |

## Patentansprüche

1. Kontaktpendeleinheit (10) für ein Kraftfahrzeug, insbesondere eine Baumaschine, umfassend ein Pendelgehäuse (12) mit einer Pendelkammer (14), ein in der Pendelkammer (14) untergebrachtes Kontaktpendel (16), eine Kontaktsensoreinheit (20) mit einer in der Pendelkammer (14) um das Kontaktpendel (16) pendelgehäusefest angeordnete Kontaktfläche (22) zur Kontaktaufnahme mit dem Kontaktpendel (16), wobei das Kontaktpendel (16) im Pendelgehäuse (12) an einer Anlenkung (18) angelenkt ist, derart, dass es bei neigungsfreier Raumlage des Pendelgehäuses (12) in Lotposition kontaktfrei zur Kontaktfläche (22) in der Pendelkammer (14) hängt und bei jeweils vorbestimmt geneigter Raumlage des Pendelgehäuses (12) in mindestens zwei quer zueinander stehende Richtungen zum Kontakt mit der Kontaktfläche (22) in eine Kontaktposition pendelbar gelagert ist, **dadurch gekennzeichnet, dass** die Pendelkammer (14) zumindest teilweise, vorzugsweise im Wesentlichen vollständig mit einer Dämpfungsflüssigkeit gefüllt ist.

2. Kontaktpendeleinheit (10) nach Anspruch 1, wobei das Kontaktpendel (16) ein Hohlkörper mit einem Hohlraum (17) ist.

3. Kontaktpendeleinheit (10) nach Anspruch 2, wobei die Dämpfungsflüssigkeit teilweise in den Hohlraum (17) des Kontaktpendels (16) dringt, und die Flüssigkeit ausserhalb des Hohlraums (17) und im Hohlraum (17) in Fluidkommunikation stehen.

4. Kontaktpendeleinheit (10) nach einem der Ansprüche 1 bis 3, wobei Kontaktpendelflächen, welche zum Kontakt mit der Kontaktfläche (22) bestimmt sind, derart ausgebildet sind, dass die Kontaktpendelflächen (23) in punktförmigen, linienförmigen oder flächigen Kontakt mit der Kontaktfläche (22) treten.

5. Kontaktpendeleinheit (10) nach einem der Ansprüche 1 bis 4, wobei das Kontaktpendel (16) aus einem starren Körper besteht, welcher vorzugsweise einstückig und vorzugsweise aus Aluminium ausgebildet ist.

6. Kontaktpendeleinheit (10) nach einem der Ansprüche 1 bis 5, wobei der starre Körper im Wesentlichen zylinderförmig und freihängend in der Pendelkammer (14) angelenkt ist und der Hohlraum (17) über eine Öffnung (170) im Kontaktpendel (17) mit der Dämpfungsflüssigkeit in Fluidkommunikation steht.

7. Kontaktpendeleinheit (10) nach einem der Ansprüche 1 bis 6, wobei das Kontaktpendel (16) eine runde, vorzugsweise eine kreisrunde Querschnittsgestalt hat.

8. Kontaktpendeleinheit (10) nach einem der Ansprüche 1 bis 7, wobei die Anlenkung (18) ein kreuz- oder kardangelenkartig ausgebildet ist und das Kontaktpendel (16) daran derart im Pendelgehäuse (12) angelenkt ist, dass das Kontaktpendel (16) in zwei senkrecht aufeinander stehenden Pendelebenen in die jeweilige Kontaktposition pendelbar gelagert ist.

9. Kontaktpendeleinheit (10) nach einem der Ansprüche 1 bis 8, wobei Kontaktpendel (16) und die Kontaktfläche (22) derart im Pendelgehäuse (12) angeordnet sind, dass ein Schaltabstand, welchen das Kontaktpendel (16) zwischen der Lotposition und der Kontaktposition zurücklegt, 0.2 Millimeter bis 10 Millimeter, vorzugsweise 0.5 bis 2 Millimeter und insbesondere im Wesentlichen 0.8 Millimeter beträgt.

10. Kontaktpendeleinheit (10) nach einem der Ansprüche 1 bis 9, wobei die Kontaktfläche (22) Kontaktflächenabschnitte (23) aufweist, wobei die Kontaktflächenabschnitte (23) derart angeordnet sind, dass jede Pendelebene in einer Kontaktposition von einem Kontaktflächenabschnitt (23) quer durchstossen wird.

11. Kontaktpendeleinheit (10) nach Anspruch 10, wobei das Kontaktpendel (16) derart im Pendelgehäuse (14) angelenkt ist, dass das Kontaktpendel (16) in jeder Raumlage des Pendelgehäuses (12) zwischen den Kontaktflächenabschnitten (23) verbleibt.

12. Kontaktpendeleinheit (10) nach einem der Ansprüche 1 bis 11, wobei das Kontaktpendel (16) und die Kontaktfläche (22) auf unterschiedlichen elektrischen Potentialen gehalten sind, wobei eine elektrische Spannung zwischen dem ersten und dem zweiten elektrischen Potential im Bereich von 1.5 Volt bis 30 Volt, bevorzugt im Bereich von 6 Volt bis 24 Volt, insbesondere im Wesentlichen 12 Volt beträgt.

13. Kontaktpendelvorrichtung (1) mit mindestens zwei Kontaktpendeleinheiten (10, 10'), insbesondere nach einem der Ansprüche 1 bis 12, **dadurch gekennzeichnet, dass** die Kontaktpendeleinheiten (10. 10') jeweils ein Pendelgehäuse (12) mit einer Pendelkammer (14) und einem darin an einer Anlenkung (18) angelenkten Kontaktpendel (16) aufweisen, wobei die Kontaktpendeleinheiten (10,10') derart zueinander angeordnet sind, dass die Kontaktpendel (16) sich in entgegengesetzte Richtungen in den jeweiligen Pendelgehäusen (12) erstrecken, wobei je nach Raumlage der Kontaktpendelvorrichtung (1) mindestens die Kontaktpendeleinheiten (10) mit dem freihängenden Kontaktpendel (16) in Betriebsbereitschaft steht.

14. Kontaktpendelvorrichtung (1) nach Anspruch 13, wobei eine Aktivierungseinheit (30) zur raumlageabhängigen Aktivierung einer Kontaktpendeleinheit (10) vorgesehen ist, welche ein unter Gravitationseinwirkung bewegliches Aktivierungselement (36) in einer Kontaktkammer (32) umfasst, wobei die Kontaktkammer (32) Aktivierungskontakte (34, 35) für jede Kontaktpendeleinheit (10) umfasst, wobei das Kontaktelement (36) derart beweglich in der Kontaktkammer (32) angeordnet ist, dass eine Kontaktpendeleinheit (10, 10') aktiviert ist, wenn deren Kontaktpendel (16) frei in der Anlenkung (18) hängt.

15. Verwendung der Kontaktpendeleinheit (10) nach einem der Ansprüche 1 bis 12 oder der Kontaktpendelvorrichtung (1) nach einem der Ansprüche 13 oder 14 zur Nivellierung von Werkzeugaufsätzen auf Baumaschinen, insbesondere für Ramm- und Bohrwerkzeuge oder kombinierte Ramm- und Bohrwerkzeuge oder Verdrängungswerkzeuge.
